# EUROPÄISCHE PATENTSCHRIFT

(11) **EP 1 736 297 B1**
(45) Veröffentlichungstag und Bekanntmachung des Hinweises auf die Patenterteilung: **17.12.2008**
(21) Anmeldenummer: 05013523.5
(22) Anmeldetag: 23.06.2005
(51) Int. Cl.: B29C 47/88, B29C 47/92

(54) **Steuerbarer Kühlgasring mit Gleichrichtereinheit**
Controllable gas cooling ring with rectifying unit
Anneau gouvernable de refroidissement par gas avec groupe redresseur

(43) Veröffentlichungstag der Anmeldung: 27.12.2006
(73) Patentinhaber: Kdesign GmbH, 53639 Königswinter (DE)
(72) Erfinder: Zimmermann, Richard, 53127 Bonn (DE)
(74) Vertreter: Neumann, Ernst Dieter

(56) Entgegenhaltungen:
- DE-B4- 10 066 051
- DE-C1- 4 218 997
- US-A- 5 281 375
- US-A- 5 804 221

## Beschreibung

Die Erfindung betrifft einen Kühlgasring mit einer Mittelachse A zur Außenkühlung eines innendruckbeaufschlagten Folienschlauches bei der Herstellung von Blasfolien aus thermoplastischem Kunststoff mittels eines Blasfolienextruders, bei der der Folienschlauch aus einem Blaskopf austritt und durch den Kühlgasring koaxial zur Mittelachse A berührungslos hindurchgeführt wird, der ein Verteilerringgehäuse für Kühlgas umfaßt, an dem außen in Umfangsrichtung gleichsinnig unter einem spitzen Winkel in das Verteilerringgehäuse einlaufende Rohrstutzen angesetzt sind und das zumindest eine nach innen offene Ringdüse aufweist, wobei zwischen dem Verteilerringgehäuse und der zumindest einen Ringdüse eine Strömungsgleichrichteranordnung liegt, die durch eine Vielzahl von radialen Stegwandungen gebildete umfangsverteilte Strömungskanäle umfaßt, deren Durchtrittsquerschnitt durch Verstellmittel veränderbar ist. Die Rohrstutzen können mit ihren Mittellinien in einer gemeinsamen Ebene liegen und radial außen am Verteilerringgehäuse ansetzen oder seitlich am Verteilerringgehäuse ansetzen und mit ihrem Mittellinien eine Trichterfläche aufspannen.

Bei der Blasfolienherstellung tritt ein Folienschlauch aus thermoplastischem Kunststoff aus der Ringdüse eines Blaskopfes aus und wird in der Regel vertikal nach oben abgezogen. Die Formstabilität des Folienschlauches wird durch einen Überdruck in seinem Inneren, der vom Blaskopf aus erzeugt wird, aufrechterhalten. Der Schlauchquerschnitt vergrößert sich dabei infolge des Überdrucks in einem Verstrekkungsbereich des Folienschlauchs zunächst unter plastischer Verformung, bis durch Außenkühlung die sogenannte Frostgrenze des Folienmaterials erreicht wird, bei der die plastische Verformung des Folienmaterials zum Stillstand kommt. Der verfestigte Folienschlauch wird dann weiter oben flachgelegt und aufgewickelt.

Aufgrund von Inhomogenitäten im thermoplastischen Kunststoff ebenso wie auch als Folge von Fließstörungen im Blaskopf tritt der Folienschlauch in der Regel mit über dem Umfang ungleichmäßiger Foliendicke aus. Diese Dickenvariation über dem Umfang wird oberhalb der Frostgrenze gemessen, wobei durch die Verwendung von steuerbaren bzw. regelbaren Kühlgasringen auf die Dickenverteilung Einfluß genommen wird. Hierbei wird der Umstand ausgenutzt, daß bei beschleunigter Abkühlung des thermoplastischen Kunststoffs das Ausmaß der möglichen Verstreckung reduziert wird, während eine langsame Abkühlung eine größere Verstreckung und damit eine stärkere Reduzierung der Foliendicke möglich macht. Kühlgasringe, die Steuer- oder Regelmöglichkeiten zur Variation der Kühlung über dem Umfang ermöglichen, sind aus dem Stand der Technik bekannt.

Bei den zur Außenkühlung des Folienschlauches eingesetzten Kühlgasringen ist es für eine gleichmäßige Kühlung von höchster Wichtigkeit, daß die bereitgestellte Kühlgasströmung zum einen drallfrei radial auf den Folienschlauch gerichtet ist und daß diese Kühlgasströmung zum anderen frei von zufälligen Strömungsfehlern ist, welche eine ungleichmäßige Folienkühlung zur Folge hätten. Daher wird bei allen modernen Kühlgasringen zunächst durch etwa tangential an einem Verteilerringgehäuse angesetzte Rohrstutzen eine Drallströmung erzeugt, welche die Inhomogenitäten eliminiert, die von der durch die Rohrstutzen gebildeten Einspeisung herrührt. Der beim Anblasen des Folienschlauches mit Kühlgas verfahrenstechnisch unerwünschte Drall muß durch eine dem Verteilerringgehäuse nachgeschaltete Strömungsgleichrichteranordnung abgebaut werden, damit eine saubere radiale Strömung am Austritt aus der Ringdüse entsteht. Um den gewünschten Effekt zu erzielen, muß eine solche Strömungsgleichrichteranordnung eine Vielzahl schmaler radial gerichteter Kanäle oder Bohrungen aufweisen, deren Länge ein Vielfaches der Breite bzw. des Durchmessers beträgt.

Aus der DE 42 18 995 A1 und der DE 42 18 997 C1 ist jeweils ein Kühlgasring der genannten Art bekannt, bei dem radial verlaufende Strömungskanäle im Anschluß an einen Strömungsgleichrichter mit steuerbaren Ventileinrichtungen bestückt sind, die in Form von zylindrischen Kolben innerhalb entsprechender Führungen in den einzelnen Strömungskanälen geführt sind. Im übrigen weist der dargestellte Kühlgasring zwei übereinanderliegende Ringdüsen auf, von denen nur die in Produktionsrichtung erste Strömungskanäle hat, die mit den genannten Ventileinrichtungen versehen sind, während die in Produktionsrichtung zweite den Hauptkühlluftstrom führende Ringdüse in den zugeordneten Strömungskanälen keine derartigen Ventileinrichtungen aufweist. Hierbei sind in nachteiliger Weise aufwendige Segmentkanäle nach dem Strömungsgleichrichter erforderlich.

Aus der EP 1 377 796 A2 ist eine Vorrichtung der genannten Art bekannt, bei welcher die einzelnen Strömungskanäle in einer Strömungsgleichrichtereinheit von Schrauben steuerbar verschließbar sind, wobei für jeden einzelnen Strömungskanal eine Schraube erforderlich ist. Aufgrund der engen Lage der Schrauben zueinander ist der Einbau einzelner Aktuatoren für jede der Schrauben praktisch nicht möglich.

In der EP 0 682 596 B1 wird vorgeschlagen, bei einer derartigen Vorrichtung nur einen Aktuator vorzusehen, der sich auf einer Kreisbahn bewegt, um die Schrauben jeweils nacheinander einzeln zu verstellen, wodurch die Regelgeschwindigkeit extrem herabgesetzt wird. Hierbei ist eine störanfällige Konstruktion erforderlich, um den Aktuator positionsgenau und reproduzierbar auf die Schrauben einwirken lassen zu können.

Aus der US 5 281 375 A ist ein Kühlgasring bekannt, bei dem eine über dem Umfang regelbare Teilkühlgasmenge unmittelbar hinter einer über dem Umfang undifferenziert zugeführten Hauptkühlgasmenge zugeleitet wird. Im Zusatzkühlgasring für die Zusatzkühlgasmenge ist eine Vielzahl von radialen Einzelkanälen durch Zwischenwände gebildet, von denen jeder eine verstellbare Einzeldüse mit einem Betätigungselement aufweist.

Aus der DE 100 66 051 B4 ist eine Vorrichtung der genannten Art bekannt, bei der Kühlgas in einem über dem Umfang undifferenziert austretenden Hauptkühlgasstrom und einen in Produktions- bzw. Strömungsrichtung davorliegenden Zusatzkühlgasstrom aufgeteilt ist. Nur letzterer umfaßt einzelne radiale Kühlkanäle, die mittels eines jeweils eigenen Regel- oder Stellventils regelbar sind.

Aus der US 5 804 221 ist eine Kühlvorrichtung der genannten Art bekannt, bei der über dem Umfang verteilte Regelorgane als auf einem Stift gelagerte zweiarmige Hebel ausgebildet sind, die auf eine in einem einheitlichen Ringraum ohne Segmentierung liegende unsegmentierte ringförmige Membran einwirken. Die Membran regelt ausschließlich einen in Strömungsrichtung zuerst austretenden Teilstrom der Kühlgasmenge, während der in Strömungsrichtung dahinter aus einer ungeteilten Ringdüse austretende Hauptstrom der Kühlgasmenge über dem Umfang undifferenziert austritt.

Der vorliegenden Erfindung liegt die Aufgabe zugrunde, eine Vorrichtung der eingangs genannten Art bereitzustellen, die technisch einfache Mittel verwendet und erhöhte Funktionssicherheit hat. Die Lösung hierfür besteht in einem Kühlgasring zur Außenkühlung eines innendruckbeaufschlagten Folienschlauches bei der Herstellung von Blasfolien aus thermoplastischem Kunststoff, der ein Verteilerringgehäuse für Kühlgas umfaßt, an dem außen etwa tangential gleichsinnig in das Verteilerringgehäuse einlaufende Rohrstutzen angesetzt sind und der zumindest eine nach innen offene Ringdüse aufweist, wobei zwischen dem Verteilerringgehäuse und der zumindest einen Ringdüse eine Strömungsgleichrichteranordnung liegt, die durch eine Vielzahl von radialen Stegwandungen gebildete umfangsverteilte Strömungskanäle umfaßt, deren Durchtrittsquerschnitt durch Verstellmittel veränderbar ist, wobei jeweils ein einzelnes Verstellelement auf den Durchtrittsquerschnitt einer Mehrzahl von in Umfangsrichtung zueinander benachbarten Strömungskanälen der Strömungsgleichrichteranordnung synchron querschnittsverändernd einwirkt.

Das zugrundeliegende Prinzip liegt in einer Drosselung einzelner Durchtrittsquerschnittsbereiche. Hierbei können in einer Neutral- oder Ausgangsstellung die Durchtrittsquerschnitten erweitert werden. Hierbei wird idealerweise der Gesamtdurchsatz von Kühlgas durch den Kühlgasring konstant gehalten. Durch die gemeinsame Verstellung jeweils mehrerer Strömungskanäle durch ein einziges Stellelement wird nur noch ein Bruchteil von entsprechenden Stellelementen erforderlich, so daß der mechanische ebenso wie der steuerungstechnische Aufbau der Steuerung und/oder Regelung stark vereinfacht wird. Zur Beeinflussung, d.h. zur Steuerung oder Regelung der Verteilung des Kühlgasdurchsatzes über dem Umfang werden die Strömungskanäle der ohnehin vorhandenen Strömungsgleichrichteranordnung genutzt, d.h. es werden keine aufwendigen zusätzlichen Segmentplatten zur Anordnung der Stelielemente wie in der DE 42 18 995 A1 benötigt. Da die Beeinflussung der jeweiligen Gruppe von Strömungskanälen unmittelbar an ihrem Eintritt oder unmittelbar an ihrem Austritt erfolgt, ist es möglich, den Kühlgasring wahlweise mit einer oder zwei Lippendüsen zu bestücken, die dann beide in gleicher Art von der Steuerung bzw. Regelung beeinflußt werden.

Die Verwendung des erfindungsgemäßen Kühlgasringes erfolgt bevorzugt als einzelner unmittelbar über dem Blaskopf angeordneter Kühlgasring. Nicht ausgeschlossen ist aber die Verwendung des erfindungsgemäßen Kühlgasringes als zumindest einer von zwei Kühlgasringen in Folienblasanlagen, die zwei Kühlgasringe in axialem Abstand zueinander verwenden. Weitere sinnvolle Anwendungen können sich in allen anderen Feldern der Extrusion von Rundschläuchen ergeben, wo Kühlgasringe eingesetzt werden, beispielsweise in der Schaumextrusion oder in Spezialblasanlagen nach dem sogenannten Double-bubble-Verfahren.

In einer bevorzugten Ausführungsform sind die Verstellelemente als blatt- oder zungenförmige Flachfedem ausgebildet, die jeweils einer Gruppe oder Mehrzahl von zueinander benachbarten Strömungskanälen der Strömungsgleichrichteranordnung zugeordnet sind und die mit ihrer Blattfläche etwa senkrecht zur Mittelachse liegend an einem Rand fixiert sind und deren freies Ende in Richtung der Mittelachse mittels jeweils eines Verstellelementes ausbiegbar ist. Das ausbiegbare Ende verschließt zunehmend den Eintritt der entsprechenden Mehrzahl von Strömungskanälen der Strömungsgleichrichteranordnung. Mehrere Flachfedern können an ihrer Basis einstückig miteinander verbunden sein, so daß die Befestigung innerhalb des Kühlgasringkanals erleichtert ist. Anstelle von Flachfedern der genannten Art können auch gekrümmte Schieberplatten verwendet werden, die an die Krümmung des Verteilerringgehäuses vor den Stegwandungen oder an die Krümmung der Ringdüse hinter den Stegwandungen angepaßt sind und mit ihrer gekrümmten Plattenfläche auf die Mittelachse zentriert sind. Die Führung kann hierbei von einer Gehäusenut wahrgenommen werden, in die die Schieberplatten teilweise oder ganz abgesenkt werden können.

Die Verstellelemente jeglicher Art, d.h. insbesondere die im wesentlichen senkrecht zu ihrer Mittelebene ausbiegbaren Flachfedern, als auch die in Richtung ihrer Mittelebene verschiebbaren Flachschieber können von einzelnen Linearaktuatoren beaufschlagbar sein, deren Verstellweg etwa parallel zur Mittelachse ausgerichtet ist. Hierbei kommen insbesondere elektromotorisch oder elektromagnetisch angetriebene Linearaktuatoren in Betracht, ohne daß andere Typen von Linearaktuatoren ausgeschlossen sind. Die Verstellelemente können vorzugsweise außen am Verteilerringgehäuse angeordnet sein und mit einem Stellglied durch Bohrungen des Verteilerringgehäuses hindurchgreifen.

Es ist sinnvoll, die Verstellelemente gegen Beschädigung sowie gegen thermische Strahlung und Verschmutzung vom Blaskopf zu schützen, insbesondere wenn der Kühlgasring unmittelbar oder über einen Distanzring am Blaskopf angeschraubt ist.

Konstruktiv besteht das Verteilerringgehäuse vorzugsweise aus einer im wesentlichen ebenen Ringplatte und einem nach unten offenen Ringtrogkörper, die miteinander verschraubt sind, um den Kühlgasring zu bilden. Die Rohrstutzen können einstückig mit dem genannten Ringtrog ausgebildet sein, während vorzugsweise die Verstellelemente und/oder die Linearaktuatoren mit der Ringplatte verbunden sind. Die Gleichrichteranordnung wird dagegen bevorzugt aus einem in das Verteilerringgehäuse, insbesondere in die Ringplatte, einsetzbaren Trägerring mit einstückig ausgebildeten Stegwandungen bestehen. Sie kann aber auch integraler Teil der Ringplatte oder des Ringtrogkörpers sein.

Soweit vorstehend der Begriff Ringdüse verwendet wird, ist hiermit nicht notwendig der unmittelbare Kühlgasaustritt gemeint, vielmehr kann die Ringdüse mit einer oder mehreren Düsenlippenpaaren bestückt sein, die an die Ringdüse auswechselbar angeschraubt sind. Hiermit kann eine leichte Anpassung an verschiedene Folienschlauchdurchmesser erfolgen, ohne daß auf einen anderen Kühlgasring übergewechselt werden muß. Die Düsenlippenpaare, die, wie bereits erwähnt, beide von der erfindungsgemäßen Steuerung beeinflußt werden, können sich hierbei aus mehreren Ringbauteilen, die jeweils koaxial zur Mittelachse aufeinandergesetzt werden, zusammengesetzt sein.

Bevorzugte Ausführungsbeispiele der Erfindung sind in den Zeichnungen dargestellt und werden nachstehend beschrieben.
- Figur 1: zeigt einen erfindungsgemäßen Kühlgasring in Ansicht in Richtung der Mittelachse mit Teilschnitt in einer ersten Ausführung;
- Figur 2: zeigt eine vergrößerte Einzelheit aus Figur 1;
- Figur 3: zeigt einen radialen Halbschnitt des Kühlgasringes nach den Figuren 1 und 2;
- Figur 4: zeigt einen erfindungsgemäßen Kühlgasring in Ansicht in Richtung der Mittelachse mit Teilschnitt in einer zweiten Ausführung;
- Figur 5: zeigt eine vergrößerte Einzelheit aus Figur 4;
- Figur 6: zeigt einen radialen Halbschnitt des Kühlgasringes nach den Figuren 4 und 5;
- Figur 7: zeigt einen erfindungsgemäßen Kühlgasring in Ansicht in Richtung der Mittelachse mit Teilschnitt in einer dritten Ausführung;
- Figur 8: zeigt eine vergrößerte Einzelheit aus Figur 7;
- Figur 9: zeigt einen radialen Halbschnitt des Kühlgasringes nach den Figuren 7 und 8;
- Figur 10: zeigt einen erfindungsgemäßen Kühlgasring in Ansicht in Richtung der Mittelachse mit Teilschnitt in einer vierten Ausführung;
- Figur 11: zeigt eine vergrößerte Einzelheit aus Figur 10;
- Figur 12: zeigt einen radialen Halbschnitt des Kühlgasringes nach den Figuren 10 und 11;
- Figur 13: zeigt die Darstellung der Figur 12 mit einer vergrößerten Einzelheit;
- Figur 14: zeigt eine Folienblasanlage mit einem erfindungsgemäßen Kühlgasring im Vertikalschnitt.

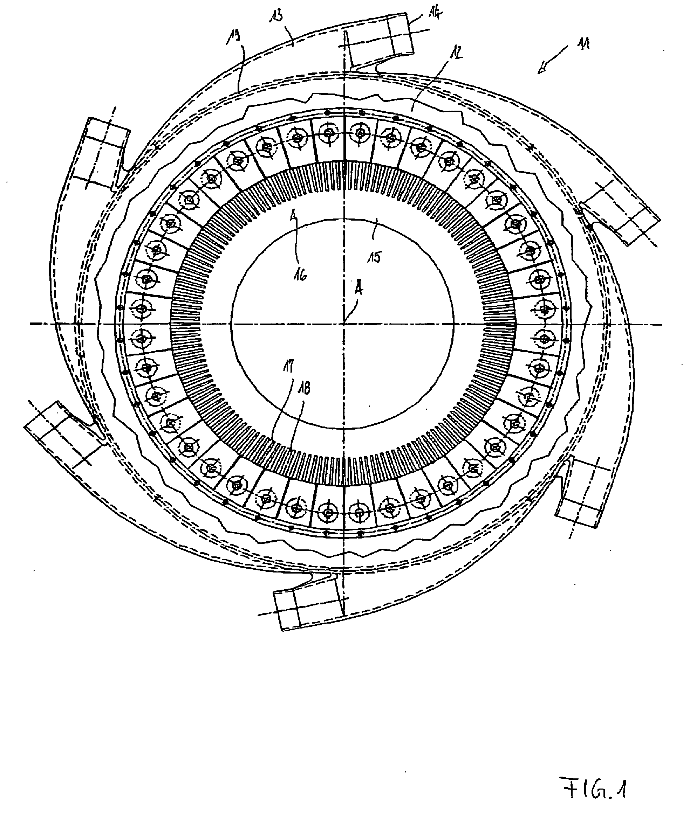

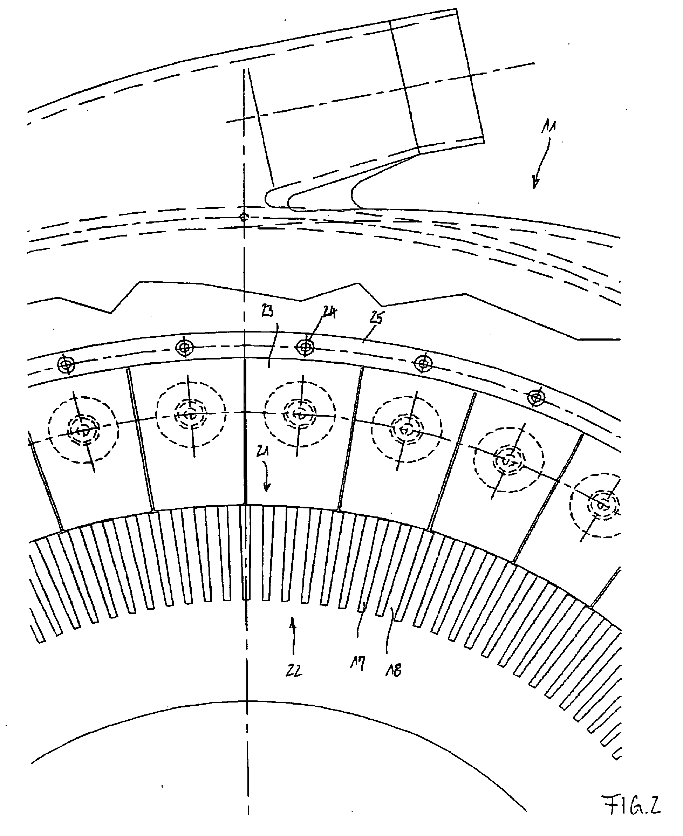

Die Figuren 1 und 2 werden nachstehend gemeinsam beschrieben. Es ist ein erfindungsgemäßer Kühlgasring 11 gezeigt, dessen Mittelachse A senkrecht auf der Zeichenebene steht. Es ist ein äußerer Verteilerringkanal 12 erkennbar, in dem sechs Rohrstutzen 13 mit Anschlußöffnungen 14 zum Ansetzen von Schlauchleitungen untereinander gleichsinnig etwa tangential gerichtet einlaufen. Die Rohrstutzen 13 treten im Bereich von Strömungsübertritten 19 in den Ringkanal 12 ein. Radial innen hat der Kühlgasring 11 eine Ringdüse 15, an die ringförmige Anbauteile zur Ausbildung von Düsenlippenpaaren angesetzt werden können. Aufgrund des tangential gerichteten Einlaufs der Rohrstutzen 13 in das Verteilerringgehäuse weist das Kühlgas im Bereich des Verteilerringgehäuses 12 einen erheblichen Drall auf, während das Kühlgas innen aus der Ringdüse 15 gleichmäßig radial austreten soll. Daher ist zwischen Verteilerringgehäuse 12 und Ringdüse 15 eine Strömungsgleichrichtereinheit 16 angeordnet, die aus einer Vielzahl von radial verlaufenden Stegwandungen 17 gebildet wird, zwischen denen jeweils einzelne Strömungskanäle 18 liegen.

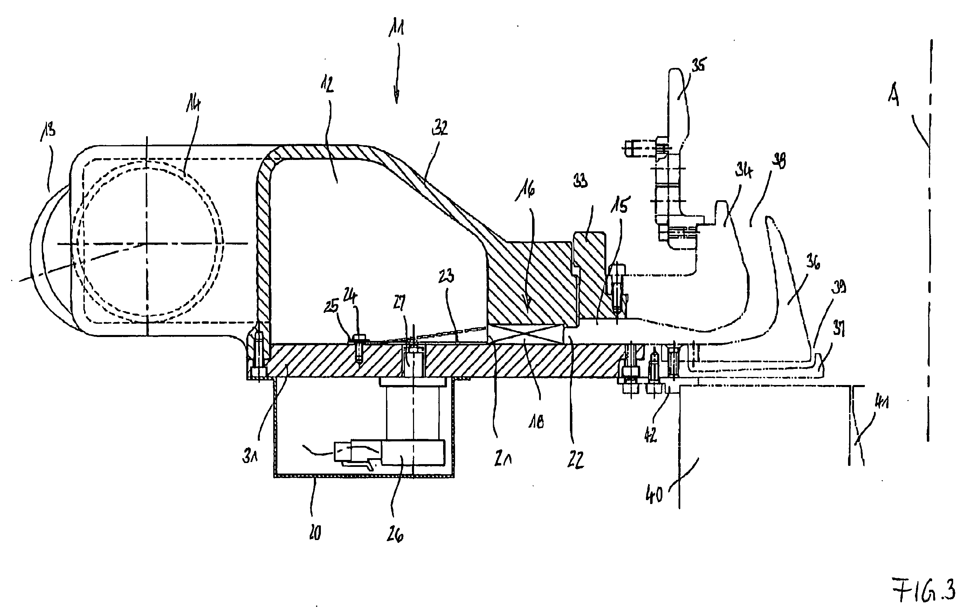

Wie in den Figuren 2 und 3 näher zu erkennen ist, sind die Stegwandungen 17 in Radialrichtung mit gleichem Umfangsabstand angeordnet. Radial außen ist mit 21 die Eintrittsseite zu den Strömungskanälen 18 und radial innen ist mit 22 die Austrittsseite der Strömungskanäle 18 bezeichnet. Wie aus den Figuren 2 und 3 in Zusammenschau zu ersehen ist, umfassen die Verstellmittel für die Strömungskanäle 18 einzelne über dem Umfang verteilte Flachfedem 23, die mit Schrauben 24 und einem Spannring 25 an ihren radial äußeren Enden im Verteilerringgehäuse 12 befestigt sind.

Jede der Flachfedem 23 überdeckt in Umfangsrichtung die Eintrittsseite 21 einer Mehrzahl oder Gruppe von vier Strömungskanälen 18. Unterhalb jeder Flachfeder 23 sitzt ein Linearaktuator 26 außen am Kühlgasring 11, dessen beweglicher Stellkolben 27 die Wand des Verteilerringgehäuses 12 durchsetzt und auf die Flachfeder 23 gegen eine elastische Rückstellkraft einwirken kann, so daß die Flachfeder 23 in die gestrichelte Stellung oder in jede beliebige Zwischenstellung ausgelenkt werden kann. Hierdurch kann jeweils der Querschnitt der vier Strömungskanäle 18 an der Eintrittsseite 21 stufenlos verstellt werden, wodurch jeweils der Durchfluß von Kühlgas in den vier Strömungskanälen gemeinsam beeinflußt werden kann. Der Linearaktuator 26 kann insbesondere elektromotorisch betätigt sein. Ein Gehäusering 27 dient zum Schutz der Linearaktuatoren 26, insbesondere auch gegen Wärmezufuhr und Verschmutzung von außen. Die Flachfedem 23 können in bevorzugter Ausführung zu mehreren an ihren radial äußeren Enden miteinander verbunden sein, insbesondere können vier viertelkreisförmige Flachfederelemente vorgesehen sein, die im vorliegenden Fall jeweils zehn Flachfedem umfassen und von einem ungeteilten geviertelten Spannring 25 fixiert werden.

Der Kühlgasring 11 ist, wie in Figur 3 zu erkennen ist, aus einer Ringplatte 31 und einem Ringtrog 32 zusammengesetzt, wobei die Rohrstutzen 13 und die Strömungsgleichrichtermittel 16 einstückig am Ringtrog 32 angeformt sind. Die Ringdüse 15 wird hierbei von der Ringplatte 31 und einem am Ringtrog 32 angesetzten Lippenhalter 33 sowie weiteren Ringelementen 34, 35, 36, 37 gebildet, die nur strichpunktiert dargestellt sind und eine größere Lippendüse 38 und eine kleinere Lippendüse 39 bilden, die von der Ringdüse 15 gespeist werden. Der Kühlgasring 11 sitzt über einen Adapterring 42 auf einem Blaskopf 40 auf, an dem ein Düsenspalt 41 für die Blasfolie erkennbar ist. Die Austauschbarkeit der Ringteile 34 bis 37 ermöglicht eine Anpassung des Kühlgasringes 11 an verschiedene Blasköpfe 40.

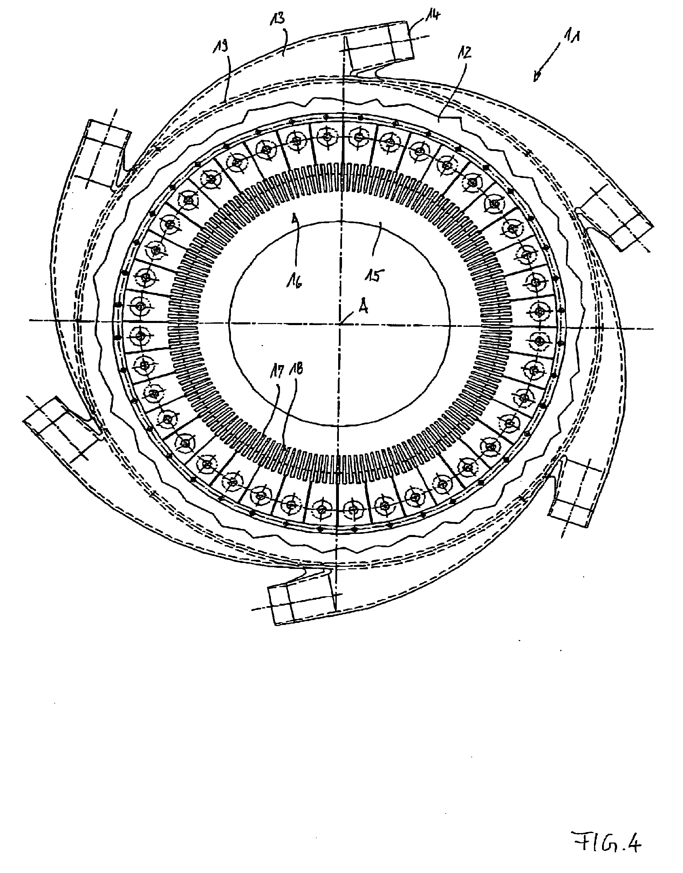

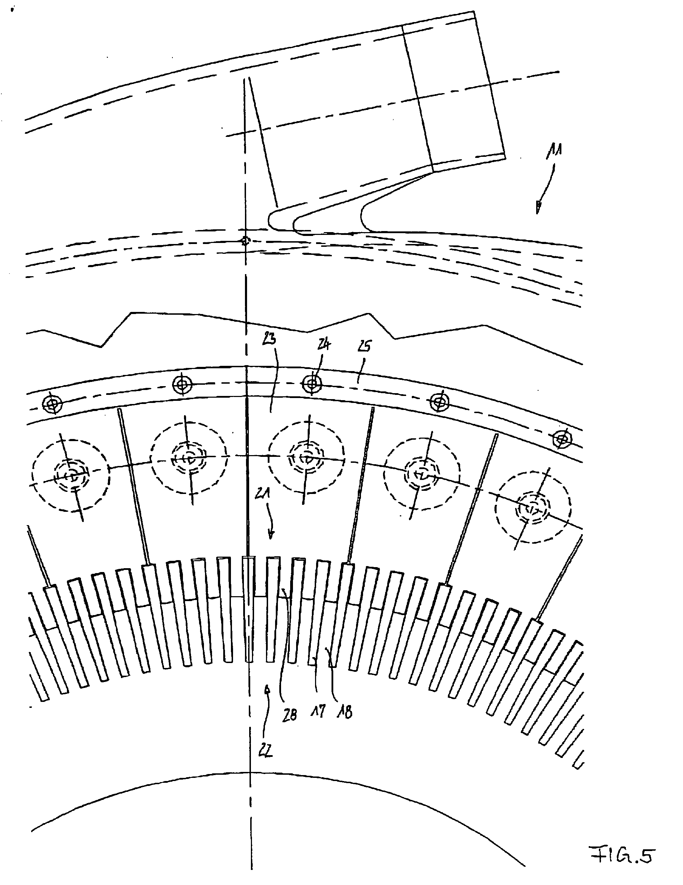

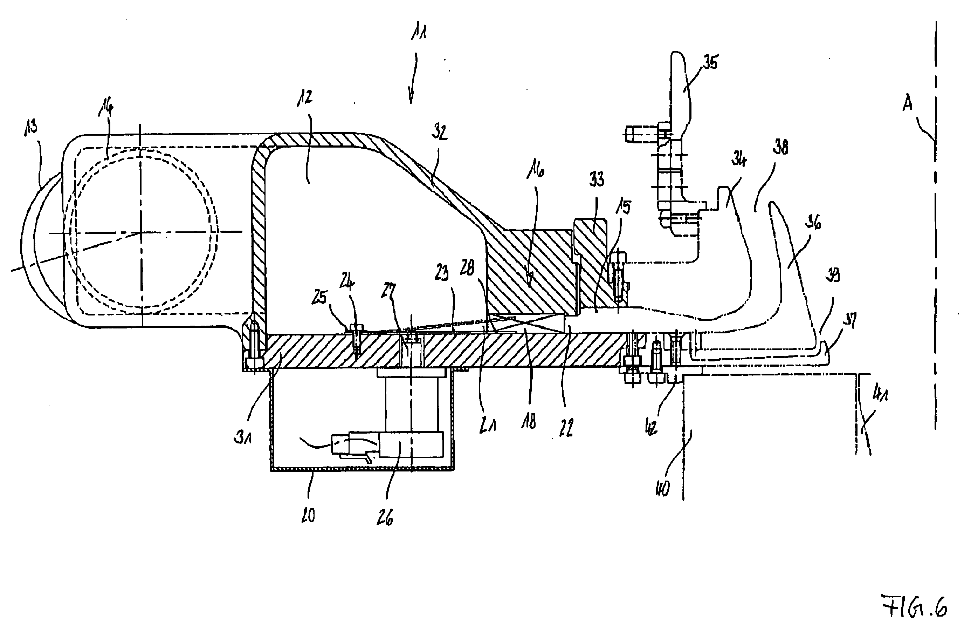

Die Figuren 4 bis 6 werden nachstehend gemeinsam beschrieben. In den Figuren 4 bis 6 sind gleiche Einzelheiten wie in den Figuren 1 bis 3 mit gleichen Bezugsziffern versehen. Auf die vorangehende Beschreibung wird insoweit Bezug genommen. Abweichend von der vorher beschriebenen Ausführung weisen hierbei die Flachfedern 23 an ihren radial innenliegenden Enden jeweils vier einzelne Finger 28 auf, die teilweise in die Strömungskanäle 18 hineinreichen und somit Verwirbelungen und Strömungsverluste auf der Eintrittsseite 21 der Strömungskanäle reduzieren können. Die übrigen Einzelheiten, entsprechen denen der vorangegangenen Figuren.

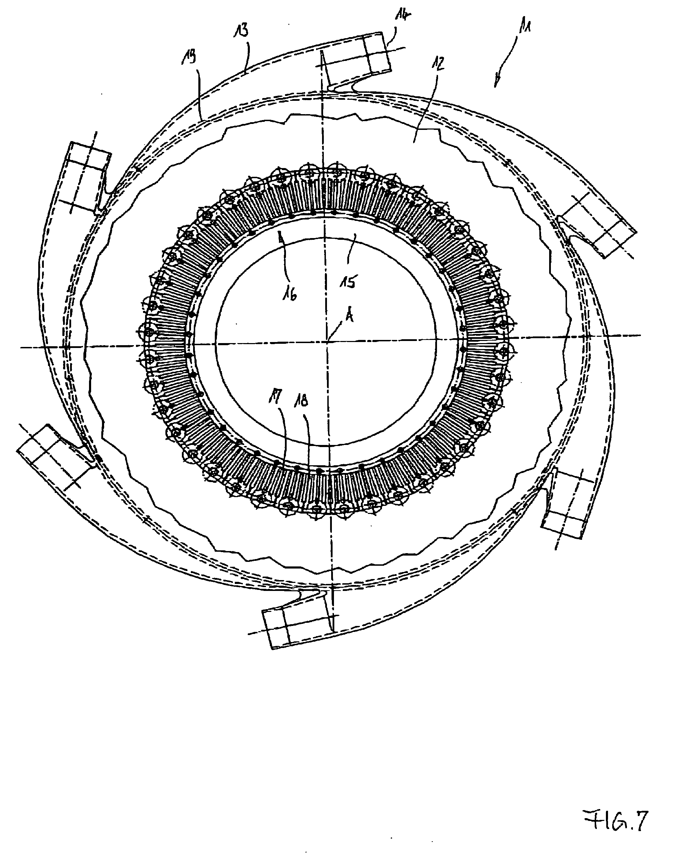

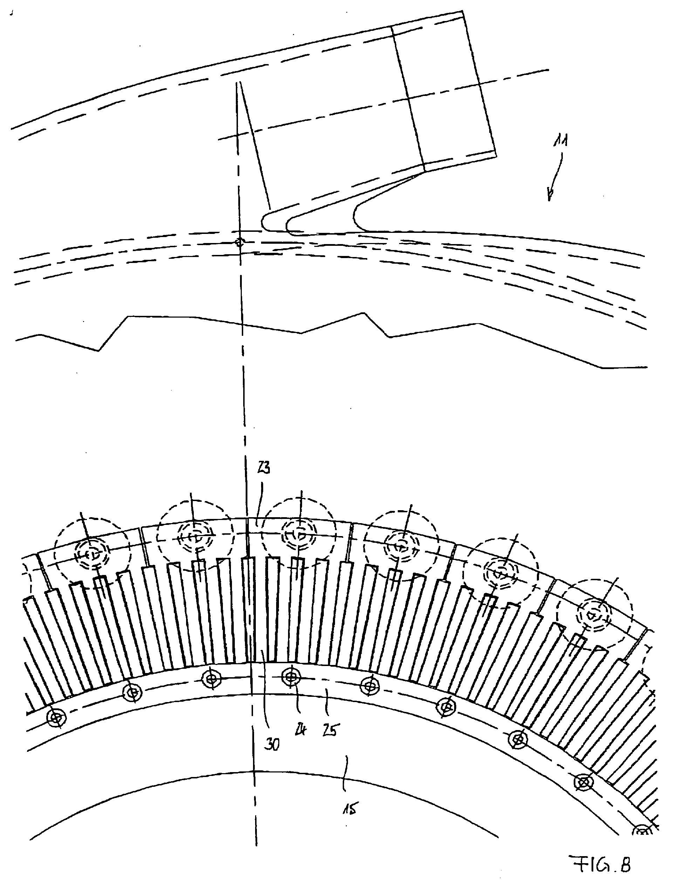

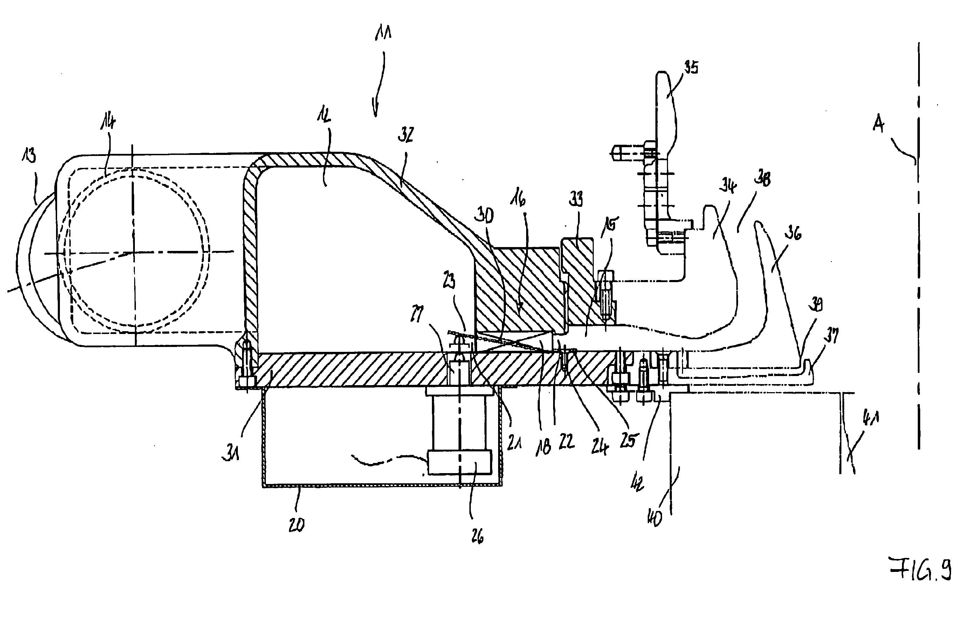

Die Figuren 7 bis 9 werden nachstehend gemeinsam beschrieben. Gleiche Einzelheiten sind mit gleichen Bezugsziffern versehen wie in den vorangegangenen Figuren. Die Flachfedem 23 erstrecken sich hier vom Verteilerringgehäuse 12 bis in die Ringdüse 15. Hierbei weisen die Flachfedern 23 jeweils Stege 30 auf, die radial durch die gesamten Strömungskanäle 18 hindurchgreifen. Im Bereich der Ringdüse 15 sind die radial inneren Enden der Flachfedern 23 von Schrauben 24 und einem Spannring 25 gehalten. Der Linearaktuator 26 liegt auch hier im Bereich des Verteilerringgehäuses 12, wo jede der Flachfedem 23 mit ihrem radial äußeren Ende auslenkbar ist. Die Eintrittsseite 21 von vier benachbarten Strömungskanälen 18 wird in Umfangsrichtung von jeweils einer Flachfeder 23 überdeckt. Bei Betätigung des Stellkolbens 27 wird, wie in der gestrichelten Darstellung erkennbar, somit auch hier der Eintrittsquerschnitt der jeweils vier Strömungskanäle von der Flachfeder stufenlos verändert.

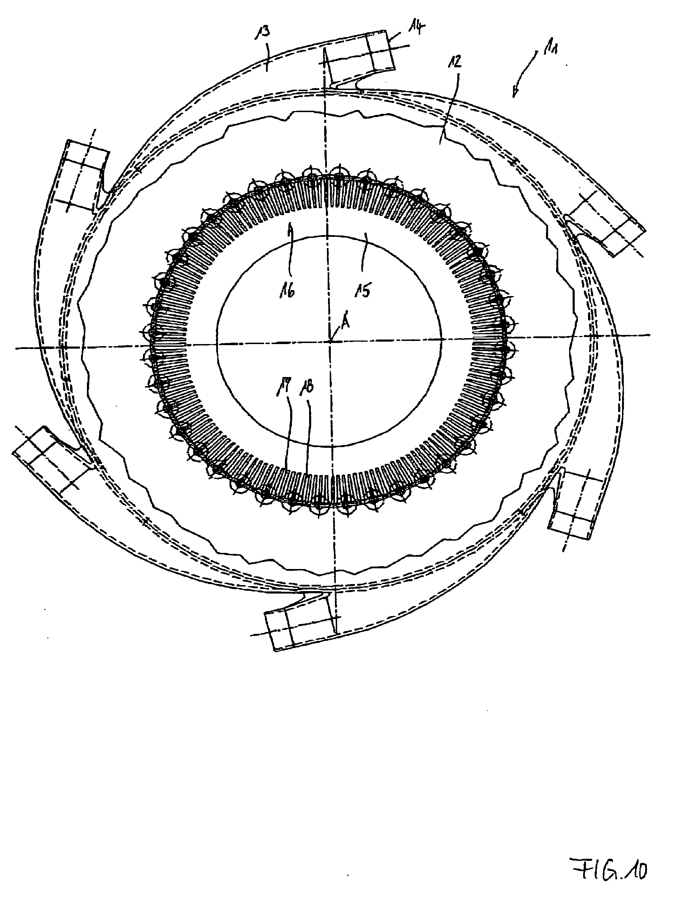

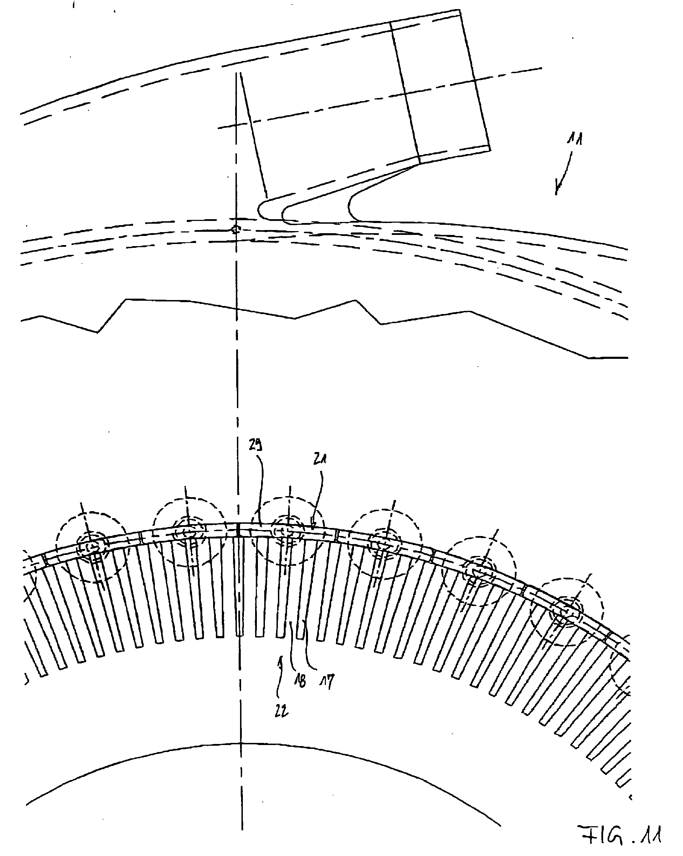

Die Figuren 10 bis 12 werden nachstehend gemeinsam beschrieben. Gleiche Einzelheiten sind mit gleichen Bezugsziffern belegt wie in den vorangegangenen Figuren. Anstelle der Verwendung von Flachfedern sind im vorliegenden Fall Flachschieber 29 auf der Eintrittsseite zu den Strömungskanälen 18 vorgesehen, die jeweils die Eintrittsseite von vier benachbarten Strömungskanälen 18 überdecken. Die Flachschieber liegen mit ihrer Schieberebene parallel zur Mittelachse A und sind leicht gekrümmt, so daß sie gleichmäßig an den radial äußeren Enden der Stegwandungen 17 anliegen. Führungsmittel für die Flachschieber sind nicht im einzelnen dargestellt; sie können z.B. mit den jeweiligen verdrehgesicherten Stellkolben 27 der Linearaktuator 26 fest verbunden sein. Auch hier kann durch einen Linearaktuator 26 im Bereich des Verteilerringgehäuses 12 der Durchflußquerschnitt jeweils einer Gruppe von vier Strömungskanälen 18 gemeinsam verstellt werden.

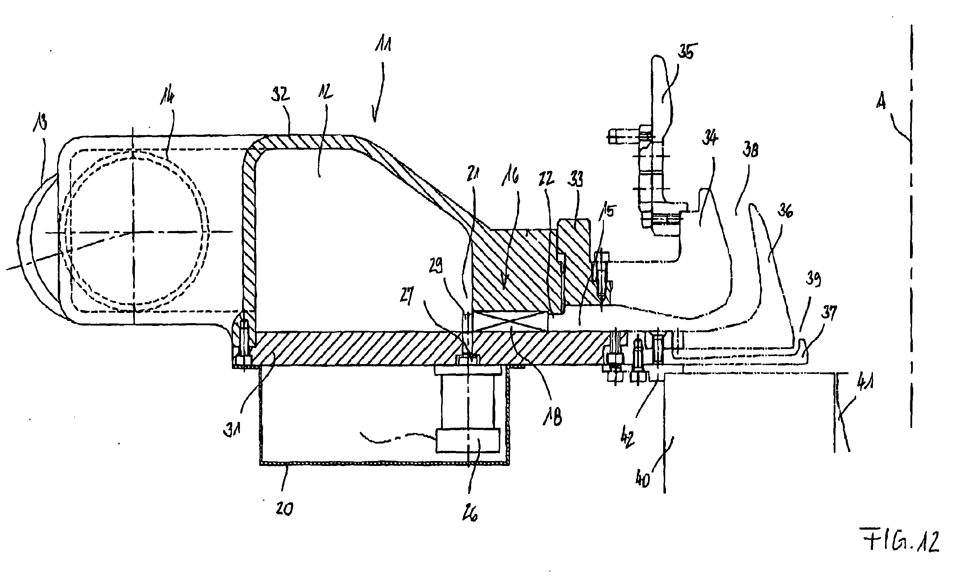

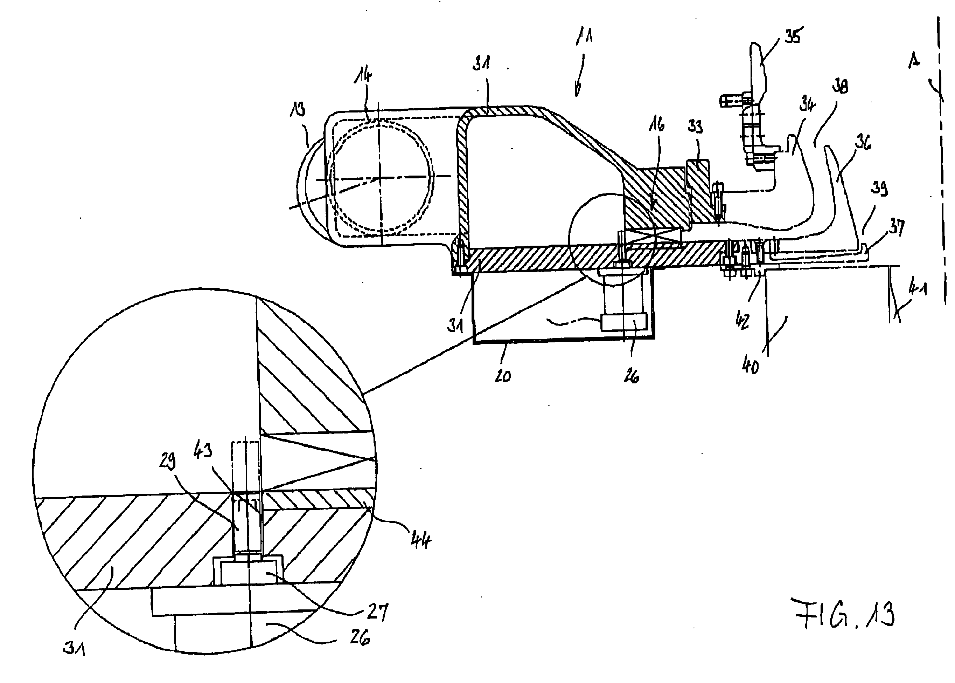

In Figur 13 sind gleiche Einzelheiten mit gleichen Bezugsziffern wie in Figur 12 dargestellt. In der vergrößerten Einzelheit ist einer der Flachschieber 29 in einer durchgezogen dargestellten Stellung erkennbar, in der der Eintritt zum Strömungskanal 18 vollkommen freigegeben ist, während er in einer gestrichelten Stellung in einer Position dargestellt ist, in der der Eintritt zum Strömungskanal 18 weitgehend verschlossen ist. Hierbei ist der Flachschieber von einer Bodennut 43, die sich ringförmig zur Mittelachse A erstreckt, noch ausreichend geführt. Es ist weiterhin als Einzelheit ein Trägerring 44 erkennbar, der in die Ringplatte 31 versenkt eingelassen ist und an dem die Stegwandungen 17 sämtlich einstückig angeformt sind.

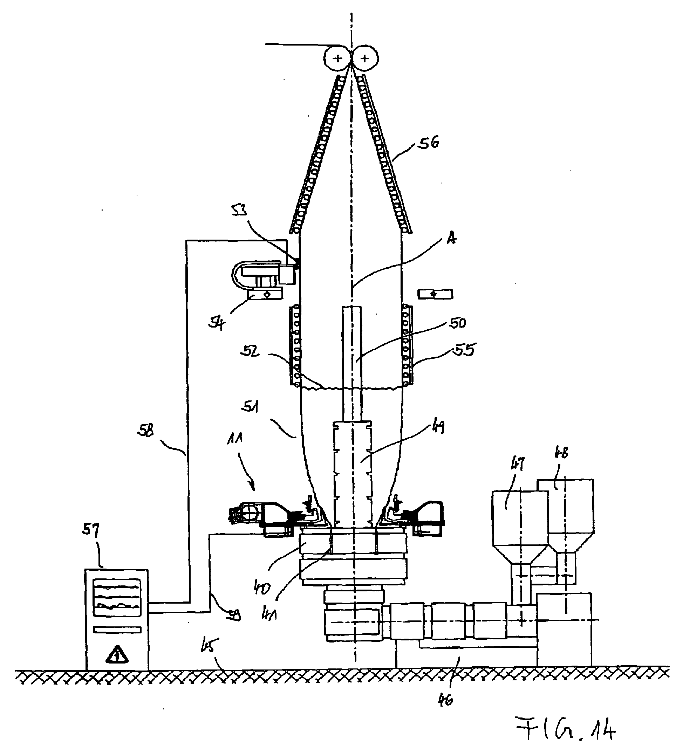

In Figur 14 ist eine vollständige Folienblasanlage mit einem erfindungsgemäßen Kühlgasring 11 im Vertikalschnitt gezeigt. Auf einem Fundament 45 steht ein Extruder 46 für thermoplastischen Kunststoff, an dem zwei Aufgabetrichter 47, 48 zu erkennen sind. An dem Extruder 46 ist ein Folienblaskopf 40 mit senkrechter Mittelachse A angeordnet, an dem eine konzentrisch zur Mittelachse A liegende Ringdüse 41 sichtbar wird. Zentral am Folienblaskopf 40 ist eine Gaseinleitanordnung 49 sowie ein Gasabsaugrohr 50 angebracht. Hiermit wird ein innerer Überdruck in dem Folienschlauch 51 erzeugt, der aus der Ringdüse 41 austritt, infolge des Überdrucks sich zunächst erweitert und an einer Frostgrenze 52 in einen Zustand übergeht, in dem eine weitere plastische Verformung des Materials nicht mehr möglich ist. Die Gaseinleitanordnung 49 kann ebenso wie der Kühlgasring 11 zur Kühlung des Schlauchfolienmaterials beitragen. Infolge des inneren Überdrucks, der auch zur Stabilisierung dient, kommt es zunächst zu einer Umfangsverstreckung des Schlauchfolienmaterials, die umso schneller unterbunden wird, je stärker das Folienmaterial abgekühlt wird. Umfangsbereiche der Schlauchfolie, die eine übermäßige Materialdicke haben, werden aus diesem Grund weniger gekühlt, während Umfangsbereiche, die bereits mit einer geringeren Materialdicke austreten, stärker gekühlt werden, um ein zusätzliches Verstrecken und damit Ausdünnen des Materials zu verhindern. Zur Erfassung der Umfangsverteilung der Schlauchfoliendicke ist eine Sensoranordnung 53 vorgesehen, die auf einem Führungsring 54 den Umfang des Folienschlauches 51 periodisch berührungslos erfassen kann. Diese Sensoranordnung liegt hinter einem Kalibrierkorb 55, in dem die Querschnittsform des Folienschlauches stabilisiert wird und vor einer Flachlegeanordnung 56, in der der Folienschlauch doppelwandig flachgelegt wird, um anschließend in der Richtung umgelenkt und auf Rollen aufgewickelt zu werden. Eine Regeleinheit 57 ist über eine Meßleitung 58 mit dem Sensor 53 zur Schlauchfoliendickenmessung verbunden und über eine Mehrzahl von Steuerleitungen 59, von denen nur eine erkennbar ist, mit den über dem Umfang des Kühlgasringes 11 verteilten Linearaktuatoren zur Verstellung der Verstellelemente verbunden, mit dem jeweils eine Mehrzahl bzw. Gruppen von radialen Strömungskanälen innerhalb der Strömungsgleichrichteranordnung gemeinsam, d.h. synchron in ihrem Durchtrittsquerschnitt verändert werden.

### Bezugszeichenliste

- 11: Kühlgasring
- 12: Verteilerringgehäuse
- 13: Rohrstutzen
- 14: Eintrittsöffnung
- 15: Düsenring
- 16: Strömungsgleichrichter
- 17: Lamelle
- 18: Strömungskanal
- 19: Übertritt
- 20: Gehäuse
- 21: Eintrittsseite
- 22: Austrittsseite
- 23: Flachfeder
- 24: Schraube
- 25: Spannring
- 26: Linearaktuator
- 27: Stellkolben
- 28: Finger
- 29: Flachschieber
- 30: Steg
- 31: Ringplatte
- 32: Ringtrog
- 33: Lippenhalter
- 34: Ringlippenteil
- 35: Ringlippenteil
- 36: Ringlippenteil
- 37: Ringlippenteil
- 38: Ringdüse
- 39: Ringdüse
- 40: Blaskopf
- 41: Ringdüse
- 42: Adapterring
- 43: Bodennut
- 44: Trägerring
- 45: Fundament
- 46: Extruder
- 47: Trichter
- 48: Trichter
- 49: Gaseinleitanordnung
- 50: Gasabsaugrohr
- 51: Folienschlauch
- 52: Frostgrenze
- 53: Dickensensor
- 54: Führungsring
- 55: Kalibrierkorb
- 56: Flachlegevorrichtung
- 57: Regeleinheit
- 58: Meßleitung
- 59: Steuerleitung

## Patentansprüche

1. Kühlgasring (11) mit einer Mittelachse (A) zur Außenkühlung eines innendruckbeaufschlagten Folienschlauches bei der Herstellung von Blasfolien aus thermoplastischem Kunststoff, der ein Verteilerringgehäuse (12) für Kühlgas umfaßt, an dem außen in Umfangsrichtung gleichsinnig in das Verteilerringgehäuse (12) einlaufende Rohrstutzen (13) angesetzt sind und der zumindest eine nach innen offene Ringdüse (15) aufweist, wobei zwischen dem Verteilerringgehäuse (12) und der zumindest einen Ringdüse (15) eine Strömungsgleichrichteranordnung (16) liegt, die durch eine Vielzahl von radialen Stegwandungen (17) gebildete umfangsverteitte Strömungskanäle (18) umfaßt, deren Durchtrittsquerschnitt durch Verstellmittel veränderbar ist,
**dadurch gekennzeichnet,**
**daß** jeweils ein einzelnes Verstellelement auf den Durchtrittsquerschnitt einer Mehrzahl von in Umfangsrichtung zueinander benachbarten Strömungskanälen (18) gemeinsam querschnittsverändernd einwirkt.

2. Kühlgasring nach Anspruch 1,
**dadurch gekennzeichnet,**
**daß** die Verstellelemente jeweils den Eintrittsquerschnitt zu einer Mehrzahl von Strömungskanälen (18) veränderbar abdecken.

3. Kühlgasring nach Anspruch 1,
**dadurch gekennzeichnet,**
**daß** die Verstellelemente jeweils den Austrittsquerschnitt aus einer Mehrzahl von Strömungskanälen (18) veränderbar abdecken.

4. Kühlgasring nach einem der Ansprüche 1 bis 3,
**dadurch gekennzeichnet,**
**daß** die Verstellelemente sich jeweils zumindest teilweise in eine Mehrzahl von Strömungskanälen (18) hinein oder durch eine Mehrzahl von Strömungskanälen (18) hindurch erstrecken.

5. Kühlgasring nach einem der Ansprüche 1 bis 4,
**dadurch gekennzeichnet,**
**daß** die Verstellelemente als Flachfedern (23) ausgebildet sind, die an einem Rand etwa senkrecht zur Mittelachse (A) liegend befestigt sind und mit einem freien Ende in Richtung der Mittelachse (A) federnd ausbiegbar sind.

6. Kühlgasring nach einem der Ansprüche 1 bis 5,
**dadurch gekennzeichnet,**
**daß** die Flachfedern (23) an ihrem radial äußeren Rand im Verteilerringgehäuse (12) fixiert sind und mit ihrem radial inneren Ende ausbiegbar sind.

7. Kühlgasring nach einem der Ansprüche 1 bis 5,
**dadurch gekennzeichnet,**
**daß** die Flachfedem (23) an ihrem radial innenliegenden Rand in der Ringdüse (15) fixiert sind und mit ihrem radial äußeren Ende ausbiegbar sind.

8. Kühlgasring nach einem der Ansprüche 1 bis 7,
**dadurch gekennzeichnet,**
**daß** jeweils mehrere Flachfedem (23) an ihrem fixierten Rand einstückig miteinander verbunden sind.

9. Kühlgasring nach einem der Ansprüche 5 bis 8,
**dadurch gekennzeichnet,**
**daß** zwischen einander in Umfangsrichtung benachbarten Flachfedern elastische Abdichtmembranen gespannt sind.

10. Kühlgasring nach einem der Ansprüche 1 bis 9,
**dadurch gekennzeichnet,**
**daß** die Verstellelemente an die Krümmung des Verteilerringgehäuses (12) vor der Strömungsgleichrichteranordnung (16) oder an die Krümmung der Ringdüse (15) hinter der Strömungsgleichrichteranordnung (16) angepaßte Schieberplatten (29) sind.

11. Kühlgasring nach Anspruch 10,
**dadurch gekennzeichnet,**
**daß** die Schieberplatten (29) in einer konzentrisch zur Mittelachse (A) verlaufenden Gehäusenut geführt sind.

12. Kühlgasring nach einem der Ansprüche 1 bis 11,
**dadurch gekennzeichnet,**
**daß** die Verstellelemente (23, 29) von einzelnen Linearaktuatoren (26) beaufschlagbar sind, deren Verstellweg etwa parallel zur Mittelachse (A) ausgerichtet ist.

13. Kühlgasring nach einem der Ansprüche 1 bis 12,
**dadurch gekennzeichnet,**
**daß** die Verstellelemente (23) außen am Verteilerringgehäuse (12) angeordnet sind.

14. Kühlgasring nach einem der Ansprüche 1 bis 13,
**dadurch gekennzeichnet,**
**daß** der Kühlgasring (11) im wesentlichen aus einer Ringplatte (31) und einem Ringtrogkörper (32) zusammengesetzt ist.

15. Kühlgasring nach einem der Ansprüche 1 bis 14,
**dadurch gekennzeichnet,**
**daß** die Rohrstutzen (13) einstückig mit dem Ringtrog (32) ausgebildet sind.

16. Kühlgasring nach einem der Ansprüche 1 bis 15,
**dadurch gekennzeichnet,**
**daß** die Strömungsgleichrichteranordnung einen in das Verteilerringgehäuse (12), insbesondere in die Ringplatte (31), eingesetzten Trägerring (44) umfaßt, an dem die Stegwandungen (17) einstückig angesetzt sind.

17. Kühlgasring nach einem der Ansprüche 1 bis 16,
**dadurch gekennzeichnet,**
**daß** zumindest zwei Lippendüsen (38, 39) vorgesehen sind, die den Austritt aus der Ringdüse (15) bilden.

18. Kühlgasring nach Anspruch 17,
**dadurch gekennzeichnet,**
**daß** die Lippendüsen (38, 39) aus einer Mehrzahl von einzelnen Ringkörpern (34-37) zusammengesetzt sind.

## Claims

1. A cooling gas ring (11) with a central axis (A) for externally cooling internally pressure-loaded blown film during the production of blown film consisting of thermoplastic plastics, which cooling gas ring (11) comprises a distributor ring housing (12) for cooling gas to which, on its outside, there are joined tube sockets (13) which circumferentially extend into the distributor ring housing (12) in the same circumferential sense and which distributor ring housing (12) comprises at least one inwardly opening annular nozzle (15), wherein between the distributor ring housing (12) and the at least one annular nozzle (15), there is positioned a flow rectifying assembly (16) which comprises circumferentially distributed flow channels (18) which are formed by a plurality of radial web walls (17) and whose passage cross-section can be varied by adjusting means,
**characterised in**
**that** each individual adjusting element acts on the passage cross-section of a plurality of circumferentially adjoining flow channels (18) jointly in a cross-section changing way.

2. A cooling gas ring according to claim 1,
**characterised in**
**that** the adjusting elements variably cover the entry cross-section of a plurality of flow channels (18).

3. A cooling gas ring according to claim 1,
**characterised in**
**that** the adjusting elements variably cover the exit cross-section of a plurality of flow channels (18).

4. A cooling gas ring according to any one of claims 1 to 3,
**characterised in**
**that** the adjusting elements extend at least partially into a plurality of flow channels (18) or through a plurality of flow channels (18).

5. A cooling gas ring according to any one of claims 1 to 4,
**characterised in**
**that** the adjusting elements are provided in the form of flat springs (23) which, at one edge, are fixed so as to be positioned perpendicularly to the central axis (A) and which, by means of one free end, can be resiliently bent in the direction of the central axis (A).

6. A cooling gas ring according to any one of claims 1 to 5,
**characterised in**
**that** the flat springs (23) are fixed in the distributor ring housing (12) at their radially outer edge and can be bent out at their radially inner end.

7. A cooling gas ring according to any one of claims 1 to 5,
**characterised in**
**that** the flat springs (23) are fixed in the annular nozzle at their radially inner edge and can be bent out at their radially outer end.

8. A cooling gas ring according to any one of claims 1 to 7,
**characterised in**
**that** a plurality of flat springs (23) are integrally connected to one another at their fixed ends.

9. A cooling gas ring according to any one of claims 5 to 8,
**characterised in**
**that** resilient sealing members are stretched between circumferentially adjoining flat springs.

10. A cooling gas ring according to any one of claims 1 to 9,
**characterised in**
**that** the adjusting elements are sliding plates (29) adapted to the curvature of the distributor ring housing (12) in front of the flow rectifying assembly (16) or adapted to the curvature of the annular nozzle behind the flow rectifying assembly (16).

11. A cooling gas ring according to claim 10,
**characterised in**
**that** the sliding plates (29) are guided in a housing groove extending concentrically relative to the central axis (A).

12. A cooling gas ring according to any one of claims 1 to 11,
**characterised in**
**that** the adjusting elements (23, 29) can be loaded by individual linear actuators (26) whose adjustment path is aligned so as to extend approximately parallel to the central axis (A).

13. A cooling gas ring according to any one of claims 1 to 12,
**characterised in**
**that** the adjustment elements (23) are arranged on the outside of the distributor ring housing (12).

14. A cooling gas ring according to any one of claims 1 to 13,
**characterised in**
**that** the cooling gas ring (11) is composed substantially of an annular plate (31) and an annular trough member (32).

15. A cooling gas ring according to any one of claims 1 to 14,
**characterised in**
**that** the tube sockets (13) are produced so as to be integral with the annular trough (32).

16. A cooling gas ring according to any one of claims 1 to 15,
**characterised in**
**that** the flow rectifying assembly comprises a carrier ring (44) which has been inserted into the distributor ring housing (12), more particularly into the annular plate (31) and to which the web walls (17) have been integrally attached.

17. A cooling gas ring according to anyone of claims 1 to 16,
**characterised in**
**that** there are provided at least two lip nozzles (38, 39) which form the exit of the annular nozzle (15).

18. A cooling gas ring according to claim 17,
**characterised in**
**that** the lip nozzles (38, 39) are composed of a plurality of individual annular members (34-37).

## Revendications

1. Anneau de gaz de refroidissement (11) présentant un axe central (A), pour le refroidissement extérieur d'un film tubulaire sollicité en pression par l'intérieur, lors de la fabrication de films de soufflage en une matière synthétique thermoplastique, l'anneau comprenant un carter annulaire de distribution (12) pour du gaz de refroidissement, sur lequel sont placés, à l'extérieur, des embouts tubulaires (13) qui pénètrent selon le même sens en direction périphérique dans le carter annulaire de distribution (12), et comprenant également au moins une buse annulaire (15) ouverte vers l'intérieur, un groupe (16) de redressement et d'uniformisation directionnelle de l'écoulement étant placé entre le carter annulaire de distribution (12) et ladite buse annulaire (15) et englobant un grand nombre de canaux d'écoulement (18) qui sont répartis dans la direction périphérique et sont formés par des parois de nervures radiales (17), et dont la section transversale de passage peut être modifiée par des moyens de réglage,
**caractérisé en ce qu'**un élément de réglage individuel respectif agit de manière commune sur la section transversale de passage de plusieurs canaux d'écoulement (18) mutuellement voisins dans la direction périphérique, en en faisant varier la section transversale de passage.

2. Anneau de gaz de refroidissement selon la revendication 1, **caractérisé en ce que** les éléments de réglage couvrent respectivement, de manière réglable, la section transversale d'entrée vers plusieurs canaux d'écoulement (18).

3. Anneau de gaz de refroidissement selon la revendication 1, **caractérisé en ce que** les éléments de réglage couvrent respectivement, de manière réglable, la section transversale de sortie de plusieurs canaux d'écoulement (18).

4. Anneau de gaz de refroidissement selon l'une des revendications 1 à 3, **caractérisé en ce que** les éléments de réglage s'étendent respectivement au moins partiellement à l'intérieur de plusieurs canaux d'écoulement (18), ou bien à travers plusieurs canaux d'écoulement (18).

5. Anneau de gaz de refroidissement selon l'une des revendications 1 à 4, **caractérisé en ce que** les éléments de réglage sont réalisés sous la forme de ressorts plats (23) qui sont fixés au niveau d'un bord en étant placés environ perpendiculairement à l'axe central (A), et peuvent être fléchis élastiquement avec leur extrémité libre, dans la direction de l'axe central (A).

6. Anneau de gaz de refroidissement selon l'une des revendications 1 à 5, **caractérisé en ce que** les ressorts plats (23) sont fixés au niveau de leur bord radialement extérieur dans le carter annulaire de distribution (12), et peuvent être fléchis avec leur extrémité radialement intérieure.

7. Anneau de gaz de refroidissement selon l'une des revendications 1 à 5, **caractérisé en ce que** les ressorts plats (23) sont fixés au niveau de leur bord radialement intérieur dans la buse annulaire (15), et peuvent être fléchis avec leur extrémité radialement extérieure.

8. Anneau de gaz de refroidissement selon l'une des revendications 1 à 7, **caractérisé en ce que** plusieurs ressorts plats (23) respectifs sont reliés d'un seul tenant les uns aux autres, au niveau de leur bord fixé.

9. Anneau de gaz de refroidissement selon l'une des revendications 5 à 8, **caractérisé en ce qu'**entre des ressorts plats mutuellement voisins dans la direction périphérique, sont tendues des membranes élastiques d'étanchéité.

10. Anneau de gaz de refroidissement selon l'une des revendications 1 à 9, **caractérisé en ce que** les éléments de réglage sont des plaques de coulisseau (29) adaptées à la courbure du carter annulaire de distribution (12) en amont du groupe (16) de redressement et d'uniformisation directionnelle de l'écoulement ou à la courbure de la buse annulaire (15) en aval du groupe (16) de redressement et d'uniformisation directionnelle de l'écoulement.

11. Anneau de gaz de refroidissement selon la revendication 10, **caractérisé en ce que** les plaques de coulisseau (29) sont guidées dans une rainure de carter s'étendant de manière concentrique à l'axe central (A).

12. Anneau de gaz de refroidissement selon l'une des revendications 1 à 11, **caractérisé en ce que** les éléments de réglage (23, 29) peuvent être sollicités par des actionneurs linéaires (26) individuels, dont le déplacement de réglage est orienté sensiblement de manière parallèle à l'axe central (A).

13. Anneau de gaz de refroidissement selon l'une des revendications 1 à 12, **caractérisé en ce que** les éléments de réglage (23) sont agencés à l'extérieur sur le carter annulaire de distribution (12).

14. Anneau de gaz de refroidissement selon l'une des revendications 1 à 13, **caractérisé en ce que** l'anneau de gaz de refroidissement (11) est composé essentiellement d'une plaque annulaire (31) et d'un corps en forme d'auge annulaire (32).

15. Anneau de gaz de refroidissement selon l'une des revendications 1 à 14, **caractérisé en ce que** les embouts tubulaires (13) sont réalisés d'un seul tenant avec l'auge annulaire (32).

16. Anneau de gaz de refroidissement selon l'une des revendications 1 à 15, **caractérisé en ce que** le groupe de redressement et d'uniformisation directionnelle de l'écoulement comprend un anneau de support (44) encastré dans le carter annulaire de distribution (12), notamment dans la plaque annulaire (31), et sur lequel sont formées d'un seul tenant avec lui, les parois de nervures (17).

17. Anneau de gaz de refroidissement selon l'une des revendications 1 à 16, **caractérisé en ce que** sont prévues au moins deux buses à lèvres (38, 39), qui forment la sortie de la buse annulaire (15).

18. Anneau de gaz de refroidissement selon la revendication 17, **caractérisé en ce que** les buses à lèvres (38, 39) sont composées de plusieurs corps annulaires (34-37) individuels.
